(19) Europäisches Patentamt / European Patent Office / Office européen des brevets

(11) **EP 1 691 320 B1**

(12) **EUROPÄISCHE PATENTSCHRIFT**

(45) Veröffentlichungstag und Bekanntmachung des Hinweises auf die Patenterteilung:
**31.10.2007 Patentblatt 2007/44**

(51) Int Cl.:
***G06K 19/07*** *(2006.01)*

(21) Anmeldenummer: **06002213.4**

(22) Anmeldetag: **03.02.2006**

(54) **Schaltungsanordnung und Verfahren zur Spannungsversorgung eines Transponders**

Circuitry and procedure for the power supply of a transponder

Circuit et procédé destinés à l'alimentation en tension d'un transpondeur

(84) Benannte Vertragsstaaten:
**DE FR**

(30) Priorität: **09.02.2005 DE 102005005812**

(43) Veröffentlichungstag der Anmeldung:
**16.08.2006 Patentblatt 2006/33**

(73) Patentinhaber: **ATMEL Germany GmbH**
**74072 Heilbronn (DE)**

(72) Erfinder:
• **Moser, Daniel**
**70569 Stuttgart (DE)**
• **Moser, Helmut**
**74078 Heilbronn (DE)**

(56) Entgegenhaltungen:
EP-A- 0 505 906       EP-A- 1 014 301
EP-A- 1 387 313       DE-A1- 10 151 856
US-B1- 6 272 321

EP 1 691 320 B1

**Beschreibung**

Die Erfindung betrifft eine Schaltungsanordnung zur Spannungsversorgung eines Transponders, ein Verfahren zur Spannungsversorgung eines Transponders mit einer ersten Versorgungsspannung sowie einen Transponder mit einer Schaltungsanordnung zur Spannungsversorgung.

Die Erfindung liegt auf dem Gebiet der Transpondertechnologie und insbesondere im Bereich der kontaktlosen Kommunikation. Wenngleich prinzipiell auf beliebige Kommunikationssysteme anwendbar werden die vorliegende Erfindung sowie die ihr zugrunde liegende Problematik nachfolgend in Bezug auf Transponder für Reifendruckkontrollsysteme und deren Anwendungen erläutert. Zum allgemeinen Hintergrund der Transponder-Technologie wird auf das "RFID-Handbuch" von Klaus Finkenzeller, Hanser Verlag, dritte aktualisierte Auflage, 2002, verwiesen.

Transponder sind Mikroelektronikbauelemente, die dazu ausgelegt sind, Informationen speichern zu können, und die hierfür eine Antennenanordnung aufweisen, um ein kontaktloses Auslesen und eine Modifikation der gespeicherten Informationen zu ermöglichen. Bei Transpondern wird ein von einer Basisstation ausgesendetes elektromagnetisches Signal von dem Transponder aufgenommen und demoduliert. Man unterscheidet hier aktive, semipassive und passive Transponder, je nach dem wie deren Energieversorgung ausgebildet ist. Im Unterschied zu aktiven Transpondern weisen passive Transponder keine eigene Energieversorgung auf, so dass die im passiven Transponder für die Demodulation und Dekodierung des empfangenen elektromagnetischen Signals benötigte Energie aus dem elektromagnetischen Signal selbst entnommen werden muss.

Passive Transponder werden vor allem im Bereich der kontaktlosen Kommunikation zur Identifikation (RFID = Radio Frequency Identification) und bei Reifendruckkontrollsystem eingesetzt. Da passive Transponder über keine eigene Energieversorgung verfügen, muss die zur Versorgung des Transponders benötigte Energie durch Absorptionsmodulation der gesendeten elektromagnetischen Welle entzogen werden. Bei einem derzeit verwendeten passiven 150 kHz Transpondersystem wird dies im elektromagnetischen Nahfeld durch eine induktive Kopplung realisiert. Die damit erzielte Energiereichweite liegt im Bereich von wenigen Zentimetern bis etwa 0,5 m und hängt unter anderem von den jeweiligen nationalen HF-Vorschriften ab.

Zur Energie- und Datenübertragung wird dabei der magnetische Anteil eines elektromagnetischen Feldes genutzt und als Antennen werden Spulen eingesetzt, die die Induktivität eines Antennenschwingkreises darstellen. Um bei passiven Transpondersystemen eine ausreichende Reichweite zu erzielen, ist neben einer einheitlichen Ausrichtung oder Polarisation der Antennenspulen von Sendestation und Transponder außerdem eine Übereinstimmung der Resonanzfrequenz des Antennenschwingkreises mit der Arbeitsfrequenz relevant. In der Praxis ergibt sich das Problem, dass frequenzverstimmende Einflüsse die Resonanzfrequenz des Antennenschwingkreises des Transponders verändern. Verstimmungen des Antennenschwingkreises entstehen unter anderem durch temperaturbedingte Drifterscheinungen an den Schwingkreiselementen oder durch herstellungsbedingte Abweichungen. Dadurch ist die Resonanzfrequenz des Antennenschwingkreises nicht mehr genau auf die Übertragungsfrequenz getrimmt, wodurch der Ladestrom verringert wird. Problematisch daran ist, dass sich dann deren Kopplungsverhältnisse verschlechtert, wodurch schon bei einer geringfügigen Verstimmung der Schwingkreise der Abstand, in dem eine sichere Energie- und Datenübertragung möglich ist, beträchtlich abnimmt.

Wenn die Resonanzfrequenz eines Antennenschwingkreises genau auf die Frequenz des gesendeten bzw. empfangenen elektromagnetischen Signals abgestimmt ist, besteht die Impedanz des Antennenschwingkreises nur noch aus dem realen ohmschen Widerstand, wodurch der maximale Ladestrom und somit auch die maximale Feldstärke erreicht wird. Der maximal mögliche Ladestrom wird dann lediglich durch die Antennentreiber und die Stromversorgung begrenzt. Antennenschwingkreise erreichen die für eine Daten- und Energieübertragung erforderliche maximale Feldstärke in einem Toleranzbereich, der den Bereich kennzeichnet, in dem die Resonanzfrequenz von der Übertragungsfrequenz abweichen darf und dabei noch eine sichere Daten- und Energieübertragung gewährleistet ist. Der Toleranzbereich ist ein Maß für die maximal zulässige Abweichung der Resonanzfrequenz des Antennenschwingkreises von der Übertragungsfrequenz. Liegt die Resonanzfrequenz des Schwingkreises außerhalb dieses Toleranzbereiches, ist keine sichere Daten- und Energieübertragung mehr möglich. Die höchste Effektivität bei der Energieübertragung wird also erreicht, wenn der Antennenschwingkreis der Basisstation und der Antennenschwingkreis des Transponders im Bereich der Resonanzfrequenz betrieben werden.

Über den Antennenschwingkreis und einem diesem nachgeschalteten Gleichrichter erfolgt die Aufladung eines Ladekondensators, der der Energieversorgung des Transponders dient. Der Ladestrom zum Aufladen dieses Ladekondensators ist dann am größten, wenn der Antennenschwingkreis optimal auf die Resonanzfrequenz abgestimmt ist. Zwar reicht bei vielen Transpondern auch ein geringerer Ladestrom aus, da bei vielen Transponderanwendungen der Ladekondensator relativ klein ausgebildet ist. Allerdings besteht für einige Transponderanwendungen, wie beispielsweise den eingangs genannten Reifendruckkontrollsystemen, der Bedarf für einen verhältnismäßig großen Ladekondensators und damit einer hohen Versorgungsspannung.

Für den Fall, dass der Transponder und dessen Antennenschwingkreis nicht auf die Resonanzfrequenz abgestimmt sind, ergibt sich jedoch ein deutlich geringerer Ladestrom. Aufgrund des geringeren Antennenstroms dauert es daher signifikant länger, den Ladekondensator des Transponders aufzuladen. Im Extremfall kann dieser nie vollständig auf seine Nennspannung aufgeladen werden. Dies hat zur Folge, dass der entsprechende Transponder nicht die ihm zugewiesene Funktion aufweist und damit nicht seine Aufgabe erfüllen kann. Aus diesem Grunde besteht vor allem bei mit großen Ladekondensatoren ausgestatteten Transponder-Anwendungen der Bedarf, den Antennenschwingkreis auf die Resonanzfrequenz eines empfangenen elektromagnetischen Signals abzustimmen.

Die Resonanzfrequenz eines Antennenschwingkreis eines Transponders wird üblicherweise durch Parallelschalten von zusätzlichen kapazitiven Elementen zu dem Kondensator des Antennenschwingkreises eingestellt. Die Information für die parallel zu zuschaltenden kapazitiven Elemente sind in einem eigens dafür vorgesehenen Speicher abgelegt. Das Problem beim Abstimmen des Transponderschwingkreises besteht nun darin, möglichst schnell eine Spannung zum Abstimmen des Antennenschwingkreises bereit zu stellen. Ist der Antennenschwingkreis aber verstimmt, dauert das Aufladen des Ladekondensators sehr lange, so dass eine Spannung zum Abstimmen erst sehr spät zur Verfügung steht.

Zum allgemeinen Hintergrund solcher Abstimmvorrichtungen zum Abstimmen eines Antennenschwingkreises sei auf die Deutschen Patentanmeldungen DE 197 55 250 A1 und DE 196 14 455 A1 verwiesen.

Vor diesem Hintergrund liegt der vorliegenden Erfindung die Aufgabe zugrunde, ein möglichst schnelles Aufladen insbesondere eines mit einem großen Ladekondensators ausgestatteten Transponders bereitzustellen.

Die Deutsche Patentanmeldung DE 101 51 856 A1 beschreibt ein Verfahren und eine Schaltung zum Selbstabgleich eines Resonanzschaltkreises, wie er z. B. bei einem Transponder verwendet wird. Der Transponder weist einen Antennenschwingkreis auf. Mittels einer Spannungsüberwachung wird eine von dem Antennenschwingkreis aufgenommene Spannung überwacht und mittels einer Abstimmeinheit wird der Antennenschwenkkreis solang abgestimmt, bis er in Resonanz steht und somit die volle Spannung zur Verfügung stellt.

Die gattungsbildende Europäische Patentanmeldung EP 1 387 313 A2 beschreibt einen RFID-Transponder, der Abstimmmittel aufweist, und der mit einem Verfahren zur Antikollision arbeitet. Zum Abstimmen einer Resonanzkapazität weist der RFID-Transponder hierzu in bekannter Weise eine Hilfsspannungsquelle in Form eines Entglättungskondensators, der ausgangsseitig dem Gleichrichter nachgeschaltet ist, auf. Dieser als Hilfsspannungsquelle ausgebildete Glättungskondensator erzeugt zusammen mit einer Konstantspannungsquelle eine konstante Hilfsspannung, die über ein geeignetes Schaltnetzwerk dazu verwendet werden können, ein eingangsseitiges Kapazitätsnetzwerk abzustimmen.

Die Europäische Patentanmeldung EP 0 505 906 A1 beschreibt einen pneumatischen Reifen mit einer integrierten Transponderschaltung und einer Reifendruckeinrichtung.

Erfindungsgemäß wird diese Aufgabe durch eine Schaltungsanordnung mit den Merkmalen des Patentanspruchs 1, ein Verfahren mit den Merkmalen des Patentanspruchs 11 sowie einen Transponder mit den Merkmalen des Patentanspruch 18 gelöst. Demgemäß ist vorgesehen:

Eine Schaltungsanordnung zur Spannungsversorgung eines Transponders, enthaltend: einen Antennenschwingkreis und eine nachgeschaltete Gleichrichterschaltung zur Aufnahme und zum Gleichrichten eines elektromagnetischen Signals, einen der Gleichrichterschaltung ausgangsseitig nachgeschalteten Ladekondensator zur Bereitstellung einer ersten Versorgungsspannung zur Versorgung einer integrierten Schaltung des Transponders, einer Abstimmschaltung zur Abstimmung des Antennenschwingkreises auf dessen Resonanzfrequenz, wobei eine der Gleichrichterschaltung ausgangsseitig nachgeschaltete Hilfsspannungsquelle vorgesehen ist, die dazu ausgelegt ist, eine gegenüber der ersten Versorgungsspannung kleinere zweite Versorgungsspannung zur Versorgung der Abstimmschaltung bereitzustellen. (Patentanspruch 1)

Ein Verfahren zur Spannungsversorgung eines Transponders mit einer ersten Versorgungsspannung mittels einer erfindungsgemäßen Schaltungsanordnung mit einem ersten Betriebsmodus, bei dem ein erstes kapazitives Element eines empfangsseitigen Antennenschwingkreises auf dessen Resonanzfrequenz abgestimmt wird und während dem ein Ladekondensator inaktiv geschaltet wird, mit einem zweiten Betriebsmodus, bei dem der Ladekondensator zur Bereitstellung der ersten Versorgungsspannung aufgeladen wird. (Patentanspruch 11)

Ein Transponder, insbesondere für ein Reifendruckkontrollsystem, mit einem Empfangspfad, in dem eine erfindungsgemäße Schaltungsanordnung zur Spannungsversorgung des Transponders angeordnet ist. (Patentanspruch 18)

Die der vorliegenden Erfindung zugrunde liegende Erkenntnis besteht darin, dass im Falle eines nicht vollständig abgestimmten Antennenschwingkreises das Aufladen des Ladekondensators, der der Spannungsversorgung des Transponders dient, sehr lange dauert. Im Falle eines abgestimmten Antennenschwingkreises erfolgt dieser Ladevorgang aber signifikant schneller. Eine weitere Erkenntnis besteht darin, das zum Abstimmen des Antennenschwingkreises eine relativ geringe Energie und damit eine relativ geringe Spannung erforderlich ist, die jedenfalls signifikant geringer als die vom Ladekondensator bereitgestellte Spannung ist.

Die Idee der vorliegenden Erfindung besteht nun darin, das zum Abstimmen des Antennenschwingkreises nicht erst so lange gewartet werden muss, bis der Ladekondensator aufgeladen ist. Vielmehr wird erfindungsgemäß dieser Antennenschwingkreis zeitlich vor dem Aufladen des Ladekondensators abgestimmt, so dass der Ladekondensator anschließend mit einem optimalen Ladestrom aufgeladen werden kann. Die Spannung zum Abstimmen des Antennenschwingkreises wird dabei von einer Hilfsspannungsquelle, die vorzugsweise als Hilfskondensator ausgebildet ist, bereitgestellt. Das Aufladen des Ladekondensator erfolgt somit jeweils bei einem abgestimmten Antennenschwingkreis, so dass der Ladestrom maximal und die Ladezeit zum Aufladen des Ladekondensators minimal wird. Die vorliegende Erfindung ermöglicht somit ein mehrstufiges Powermanagement zur zeitoptimierten Aufladung des Ladekondensators.

Dies ist insbesondere für solche Transponderanwendungen besonders vorteilhaft, die einen sehr großen Ladekondensator aufweisen und bei denen zudem die Energiezufuhr aus dem elektromagnetischen Feld nicht kontinuierlich zugeführt wird, sondern immer wieder unterbrochen wird und somit quasi pulsweise vorliegt. Solche Anwendungen sind z. B. Reifendruckkontrollsysteme, bei denen der Transponder z. B. an einer Stelle der Reifenfelge angeordnet ist. Beim Betrieb dieses Reifendrucktransponders hängt die Energiezufuhr aus dem elektromagnetischen Feld von der jeweiligen Winkelstellung des Transponders ab. Bei diesen Anwendungen ist es besonders wichtig, in dem Winkelbereich, in welchem sich der Transponder im Wirkungsbereich des elektromagnetischen Feldes befindet, eine maximale Daten- und Energieübertragung zu gewährleisten. Mittels des erfindungsgemäßen mehrstufigen Powermanagement wird dies optimal realisiert.

Vorteilhafte Ausgestaltungen und Weiterbildungen der Erfindung sind den Unteransprüchen sowie der Beschreibung unter Bezugnahme auf die Zeichnung entnehmbar.

In einer vorteilhaften Ausgestaltung weist die Hilfsspannungsquelle einen zwischen den Ausgängen der Gleichrichterschaltung und den Eingängen der Abstimmschaltung angeordneten Hilfskondensator auf, der eine gegenüber dem Ladekondensator deutlich geringere Kapazität aufweist. Insbesondere weist der Ladekondensator vorzugsweise eine Kapazität im Bereich von $0{,}5\mu F$ bis $5\mu F$, vorzugsweise etwa $2\mu F$, auf. Der Hilfskondensator weist demgegenüber eine Kapazität im Bereich von 50pF bis 500pF auf. Der Hilfskondensator ist also im Vergleich zu dem Ladekondensator signifikant kleiner, typischerweise um einige 10er Potenzen kleiner dimensioniert als der Ladekondensator.

In einer vorteilhaften Ausgestaltung ist eine zumindest zweistufige Ladeschaltung vorgesehen, die eine erste Ladestufe zum Aufladen des Hilfskondensators auf die zweite Versorgungsspannung und die eine zweite Ladestufe zum Aufladen des Ladekondensators auf die erste Versorgungsspannung aufweist. Die zweite Ladestufe lädt den Ladekondensator typischerweise erst dann auf, wenn eine vorgebbare Ladeschwelle der zweiten Versorgungsspannung überschritten ist.

Gemäß einer bevorzugten Weiterbildung der Erfindung weist die Ladeschaltung und insbesondere die zweite Ladestufe zumindest einen steuerbaren Schalter auf, der in Reihe zwischen einem Ausgangsanschluss der Gleichrichterschaltung und einem Elektrodenanschluss des Ladekondensators angeordnet ist.

In einer vorteilhaften Ausgestaltung weist die Ladeschaltung eine Ansteuerschaltung auf, die ein Steuersignal zum Auf- und Zusteuern eines digital betriebenen steuerbaren Schalters abhängig von der zweiten Versorgungsspannung und einer vorgebbaren Ladeschwelle aufweist.

In einer weiteren, ebenfalls vorteilhaften Ausgestaltung weist die Ladeschaltung eine Bandgap-Steuerschaltung auf, die ein Referenzpotenzial erzeugt zur Ansteuerung eines im analogen Kennlinienbereich betriebenen, als Transistor ausgebildeten steuerbaren Schalters abhängig von der zweiten Versorgungsspannung und abhängig von einem Schaltpotenzial des Transistors.

Gemäß einer typischen Ausgestaltung weist der Antennenschwingkreis wenigstens eine Antennenspule und ein erstes kapazitives Element in Parallelschaltung aufweist.

In einer vorteilhaften Ausgestaltung weist die Abstimmschaltung einen Speicher auf, in welchem Informationen zum Abstimmen eines ersten kapazitiven Elements des Antennenschwingkreises gespeichert sind. Der Speicher, der somit als Steuerung zum Ansteuern von Schaltern des kapazitiven Abstimmnetzwerkes dient, ist vorzugsweise als EEPROM ausgebildet.

Eine weitere vorteilhafte Ausgestaltung sieht vor, dass die Abstimmschaltung zumindest ein weiteres, über Schaltvorrichtungen schaltbares kapazitives Element aufweist, welches oder welche parallel zueinander und zu dem ersten kapazitiven Element angeordnet ist/sind und von denen zumindest eines der weiteren kapazitiven Element dem ersten kapazitiven Element zuschaltbar ist.

Eine bevorzugte Ausgestaltung des erfindungsgemäßen Verfahrens umfasst folgende, nacheinander durchgeführte Verfahrensschritte:

(a) Ein zumindest teilweise entladener, inaktiv geschalteter Ladekondensator eines Transponders wird bereitgestellt;

(b) Empfängerseitiges Aufnehmen und Gleichrichten eines elektromagnetischen Signals;

(c) Aufladen eines Hilfskondensators mit einem gleichgerichteten Stromsignal zur Bereitstellung einer gegenüber der ersten Versorgungsspannung kleineren zweiten Versorgungsspannung;

(d) Abstimmen eines empfängerseitigen Antennenschwingkreises auf dessen Resonanzfrequenz unter Verwendung der zweiten Versorgungsspannung solange, bis der Antennenschwingkreis abgestimmt ist;

(e) Zuschalten des Ladekondensators;

(f) Aufladen des Ladekondensators zur Bereitstellung der ersten Versorgungsspannung des Transponders.

Vorzugsweise wird zum Aktivieren des Ladekondensators der steuerbare Schalter erst dann zugeschaltet, wenn die zweite Versorgungsspannung eine vorgebbare Ladeschwelle erreicht und/oder überschritten hat.

In einer vorteilhaften Ausgestaltung wird der Antennenschwingkreis durch paralleles Zuschalten oder Wegschalten von weiteren kapazitiven Elementen auf die Resonanzfrequenz des Antennenschwingkreises abgestimmt.

In einer vorteilhaften Ausgestaltung wird das Abstimmen im Verfahrensschritt (d) unter Verwendung von vorher gespeicherten Abstimminformationen erfolgt.

In einer vorteilhaften Ausgestaltung werden die Abstimminformationen vor dem Verfahrensschritt (c) und/oder insbesondere vor dem ersten und zweiten Betriebsmodus gespeichert, wobei die Abstimminformationen senderseitig anhand der Frequenz des gesendeten und von dem Transponder aufgenommenen elektromagnetischen Signalen ermittelt werden.

In einer vorteilhaften Ausgestaltung wird der Antennenschwingkreis über ein LF-Signal, insbesondere über ein 125-KHz-Frequenzsignal, angeregt.

Eine bevorzugte Ausgestaltung des erfindungsgemäßen Transponders enthält einen Sensor, der dazu ausgelegt ist, Reifen-spezifische Parameter aufzunehmen, einen Analog-Digital-Wandler, der ein analoges Signal mit den Reifen spezifische Parameter in ein digitales Signal wandelt, einen Codierer der, das digitale Signal codiert, einen Modulator, der das codierte Signal moduliert. Vorzugsweise ist dabei ein kapazitiver Drucksensor zur Reifendruckmessung vorgesehen.

Die Erfindung wird nachfolgend anhand der in den schematischen Figuren der Zeichnung angegebenen Ausführungsbeispiele näher erläutert. Es zeigen dabei:

Fig. 1 ein erstes, besonders bevorzugtes Ausführungsbeispiel einer erfindungsgemäßen Schaltungsanordnung;

Fig. 2 Signal-Zeit-Diagramme zur Veranschaulichung des zweistufigen Ladeverfahrens der Schaltungsanordnung aus Fig. 1;

Fig. 3 ein zweites Ausführungsbeispiel einer erfindungsgemäßen Schaltungsanordnung;

Fig. 4 Signal-Zeit-Diagramme zur Veranschaulichung des zweistufigen Ladeverfahrens der Schaltungsanordnung aus Fig. 3;

Fig. 5 ein Blockschaltbild eines Reifendruckkontrollsystems mit Reifendrucktransponder und Basisstation.

In den Figuren der Zeichnung sind gleiche und funktionsgleiche Elemente und Signale - sofern nichts anderes angegeben ist - mit denselben Bezugszeichen versehen worden.

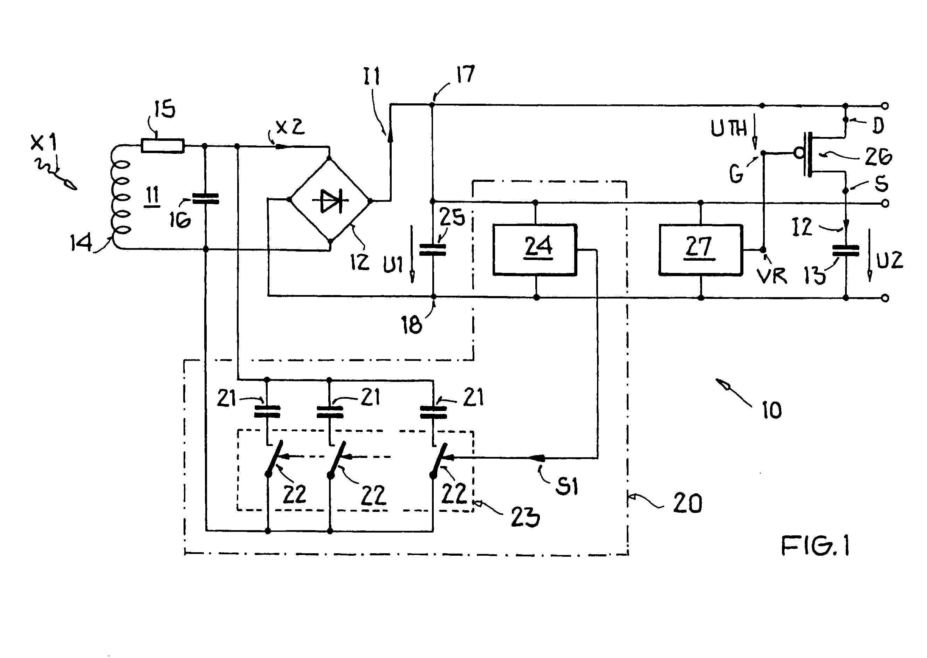

Fig. 1 zeigt ein erstes, besonders bevorzugtes Ausführungsbeispiel einer erfindungsgemäßen Schaltungsanordnung. Fig. 1 zeigt dabei lediglich den Empfangspfad eines nicht dargestellten Transponders für ein Reifendruckkontrollsystem.

In Fig. 1 ist die erfindungsgemäße Schaltungsanordnung zur Spannungsversorgung des Transponders mit Bezugszeichen 10 bezeichnet. Die Schaltungsanordnung 10 weist empfangsseitig einen Antennenschwingkreis 11 auf, dem eine Gleichrichterschaltung 12 und ein Ladekondensator 13, der auch als Stützkondensator bezeichnet wird, nachgeschaltet ist.

Der Antennenschwingkreis 11 weist eine induktive Antenne 14, die nachfolgend kurz als Antennenspule 14 bezeichnet wird, und ein in Reihe dazu angeordnetes resistives Element 15, beispielsweise einen Widerstand 15, auf. Die Antennenspule 14 dient dem Zweck, aus einem elektromagnetischen Feld ein elektromagnetisches Signal X1 aufzunehmen und daraus ein Wechselsignal X2 zu erzeugen. Der Reihenschaltung aus Antennenspule 14 und resistivem Element 15 ist ein kapazitives Element 16, beispielsweise ein Kondensator 16, zur Pufferung parallel geschaltet.

Die so mit einander verschalteten Elemente 14 - 16 des Antennenschwingkreises 11 sind mit Eingängen der Gleichrichterschaltung 12 verbunden. Das von dem Antennenschwingkreis 12 bereitgestellte Wechselsignal X2 wird somit der Gleichrichterschaltung 12 zugeführt. Die Gleichrichterschaltung 12 erzeugt daraus ein gleichgerichtetes Stromsignal I1, den so genannten Ladestrom, über welchen der zwischen den Ausgängen 17, 18 der Gleichrichterschaltung 12 angeordnete Ladekondensator 13 aufladbar ist.

Der Ladekondensator 13 fungiert als Spannungsversorgung zur Versorgung einer im Transponder implementierten integrierten Schaltung mit einer Versorgungsspannung U2. Insbesondere wird mit dieser Versorgungsspannung U2 die Transponderfunktion gewährleistet, d. h. es muss eine unidirektionale Datenübertragung von Transponder zur Basisstation und ggfs. auch eine bidirektionale Datenkommunikation von der Basisstation zum Transponder und zurück ermöglicht werden. Im Falle eines Reifendrucktransponders muss der Transponder in die Lage sein, reifenspezifische Parameter, beispielsweise den Reifendruck, die Reifentemperatur, Reifenumdrehungen, etc, aufzunehmen, die so gewonnenen analogen Signale in digitale Signale zu wandeln und zurück zu der Basisstation zu senden.

Die Schaltungsanordnung 10 weist ferner eine Abstimmschaltung 20 auf. Die Abstimmschaltung 20 enthält ein Kapazitätsnetzwerk mit kapazitiven Elementen 21, die nachfolgend kurz als Trimmkapazitäten 21 bezeichnet werden. Im Beispiel in Fig. 1 weist das Kapazitätsnetzwerk mehrere parallel zueinander und parallel zu dem kapazitiven Element 16 des Antennenschwingkreises 11 angeordnete Trimmkapazitäten 21 auf. Über jeweilige steuerbare Schalter 22 einer Schaltvorrichtung 23 sind einzelne oder mehrere dieser Trimmkapazitäten 21 dem kapazitiven Element 16 des Antennenschwingkreises 11 parallel zuschaltbar oder auch wieder wegschaltbar. Die steuerbaren Schalter 22 werden über jeweilige Steuersignale S1 aus einem Speicher 24 angesteuert. Der Speicher 24, der zwischen den Ausgängen 17, 18 der Gleichrichterschaltung 12 angeordnet ist, ist im gezeigten Ausführungsbeispiel als EEPROM-Speicher 24 ausgebildet.

In dem EEPROM-Speicher 24 sind Informationen zur Abstimmung des Antennenschwingkreises 11 abgelegt, also Informationen darüber, welche und wie viele Trimmkapazitäten 21 dem kapazitiven Element 16 parallel zugeschaltet oder weggeschaltet werden sollen. Abhängig von diesen, im Speicher 24 abgelegten Informationen werden Steuersignale S1 zur Auf- und Zusteuerung der Trimmkapazitäten 21 erzeugt. Diese im Speicher 24 abgelegten Informationen werden typischerweise von einer in Fig. 1 nicht gezeigten sendeseitigen Basisstation ermittelt, beispielsweise über die von der Basisstation ermittelte Dämpfung des Antennenschwingkreises 11 des Transponders, und werden über den Empfangspfad in an sich bekannter Weise in den Speicher 24 geschrieben. Somit sei angenommen, dass zu Beginn des erfindungsgemäßen zweistufigen Ladeverfahrens die entsprechenden Informationen zur Abstimmung des Antennenschwingkreises im Abstimmspeicher bereits vorliegen.

Die Schaltungsanordnung 10 weist ferner einen ebenfalls zwischen den Ausgängen 17, 18 der Gleichrichterschaltung 12 angeordneten Hilfskondensator 25 auf. Der Hilfskondensator 25 wird zunächst über den ausgangsseitig von der Gleichrichterschaltung 12 erzeugten Ladestrom 11 aufgeladen, so dass über den Hilfskondensator 25 eine Hilfsspannung U1 abfällt. Diese Hilfsspannung U1 des Hilfskondensators 25 dient der Spannungsversorgung der Abstimmschaltung 20 und insbesondere des darin angeordneten Speichers 24.

Die erfindungsgemäße Schaltungsanordnung 10 weist eine zweistufige Ladeschaltung auf, wobei der Hilfskondensator 25 Bestandteil der ersten Ladestufe ist. Die zweite Ladestufe weist einen steuerbaren Schalter 26 und eine diesen Schalter 26 ansteuernde Band-Gap-Steuerschaltung 27 auf.

Im bevorzugten Ausführungsbeispiel in Fig. 1 ist der steuerbare Schalter 26 als PMOS-Transistor (PMOS-FET) ausgebildet, wobei hier der PMOS-FET 26 als High-Side-Schalter ausgebildet ist. Der PMOS-FET 26 weist eine Einschaltspannung UTH (Schaltschwelle oder Schwellenspannung) auf. Dabei ist die gesteuerte Strecke (Drain-Source-Strecke) des PMOS-FET 26 in Reihe mit dem Ladekondensator 13 und diese Reihenschaltung zwischen den Ausgangsanschlüssen 17, 18 angeordnet. Es wird hier nur der Hilfskondensator 25 aufgeladen. Im ausgeschalteten Zustand fließt somit kein Ladestrom I1 durch den PMOS-FET 26, so dass in diesem Fall der Ladekondensator 13 nicht aufgeladen wird. Im eingeschalteten Zustand wird der Ladekondensator 13 hingegen über den Ladestrom I1 aufgeladen. Zum Auf- und Zusteuern des PMOS-FET 26 ist die Band-Gap-Schaltung 27 vorgesehen, die zwischen den Anschlüssen 17, 18 angeordnet ist und die somit von der Hilfsspannung U1 gespeist wird. Die Band-Gap-Schaltung 27 ist dazu ausgelegt, an ihrem Ausgang ein Referenzpotenzial VR bereitzustellen, über welches ein Steueranschluss G des PMOS-FET 26 ansteuerbar ist. Der PMOS-FET 26 in Fig. 1 wird analog, also im linearen Bereich seiner Kennlinie betrieben.

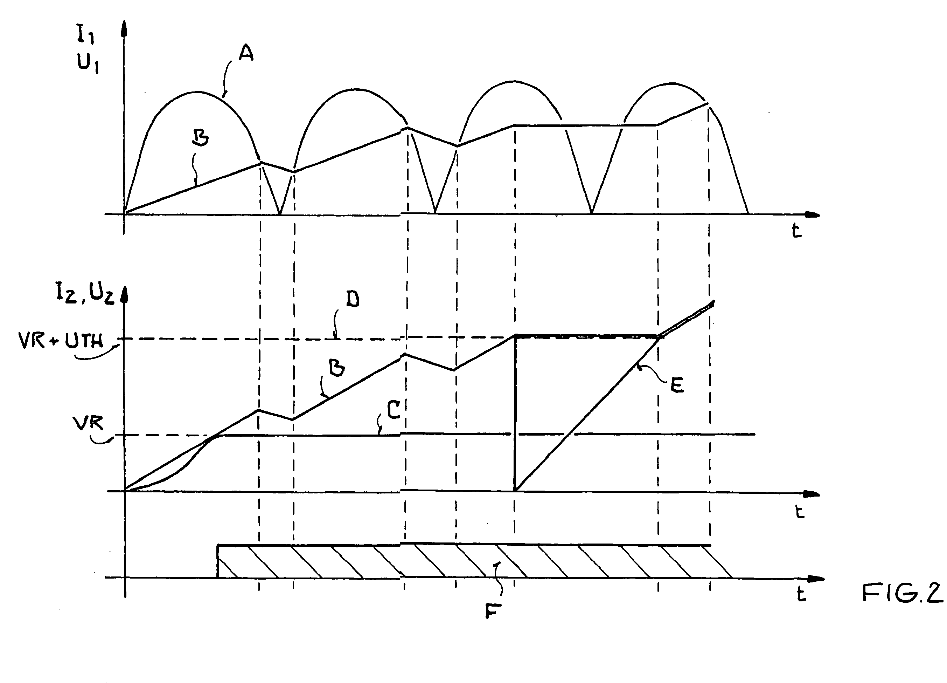

Nachfolgend sei die Funktionsweise der erfindungsgemäßen Schaltungsanordnung 10 und insbesondere der darin implementierten zweistufigen Ladeschaltung anhand der Signal-Zeit-Diagramme in Fig. 2 beschrieben.

Die Fig. 2 zeigt die Signalverläufe bei Anwendung in einem Reifendruckkontrollsystem, bei dem der Transponder also an der Felge des entsprechenden Reifens angebracht ist. Die Kurve A zeigt dabei den Ladestrom I1, der über die Gleichrichterschaltung 12 zur Verfügung gestellt wird. Der Ladestrom I1 lädt den im Vergleich zu dem Ladekondensator 13 sehr viel kleineren Hilfskondensator 25 auf, so dass am Hilfskondensator 25 eine Hilfsspannung (siehe Kurve B) abfällt. Diese Hilfsspannung U1 steigt nun mehr oder weniger kontinuierlich an. Ist die Hilfsspannung U1 groß genug, dann wird über die Band-Gap-Schaltung 27 ein Referenzpotenzial VR (siehe Kurve C) zur Ansteuerung des PMOS-FET 26 erzeugt. Wesentlich dabei ist, dass das Referenzpotenzial VR ansteigt, bevor der PMOS-FET 26 aktiv werden kann. Dies kann vorzugsweise dadurch verhindert werden, dass die Schwellspannung UTH des PMOS-FET 26 so gewählt wird, dass das Referenzpotenzial VR ansteigt, bevor der PMOS-FET 26 in den leitenden Zustand übergeht.

Der Ladestrom I1 zum Aufladen des Ladekondensators 13 fließt nun erst dann, wenn die Hilfsspannung U1 betragsmäßig den Wert des Referenzpotenzials VR plus den Wert der Schwellspannung UTH überschritten hat, wenn also gilt:

$$U1 > | VR + UTH |$$

Diese Schwelle ist in Fig. 2 mit Bezugszeichen D bezeichnet. Sobald die Hilfsspannung U1 diese Schwellenlinie D überschreitet, wird der PMOS-FET 26 leitend. Dadurch wird der Ladekondensator 13 schnell aufgeladen, wobei in Fig. 2 dieser Ladestrom I2 durch die Kurve E bezeichnet ist. Die Hilfsspannung U1 (Kurve B) steigt nun zunächst nicht mehr weiter an, da der Ladestrom I1 weitestgehend zum Aufladen des Ladekondensators 13 verwendet wird. Die Hilfsspannung U1 bleibt in etwa auf dem Wert der Spannungsschwelle D. Die Hilfsspannung U1 steigt nun zunächst nicht mehr weiter an, bis der Ladekondensator 13 soweit geladen ist, dass die über dem Ladekondensator 13 abfallende Spannung U2 annähernd die Spannungsschwelle D erreicht hat. Ab diesem Zeitpunkt steigt die Hilfsspannung U1 wieder weiter an.

Aus Fig. 2 ist zu ersehen, dass mit der Hilfsspannung U1 eine Spannung zur Verfügung steht, mit der das Abstimmen durch die Trimmkapazitäten 21 erfolgen kann, bevor der sehr große Ladestrom I2 zum Aufladen des Ladekondensators 13 fließt. In Fig. 2 ist der Zeitraum, ab dem der Antennenschwingkreis 11 über die Abstimmschaltung 20 abgestimmt werden kann, mit Bezugszeichen F bezeichnet. Je nach Auslegung und Dimensionierung der zweistufigen Ladeschaltung und der Abstimmschaltung 20 erfolgt das Abstimmen des Antennenschwingkreises 11 auf die Resonanzfrequenz entweder kurz vor oder kurz nach der Erzeugung der Referenzschwelle VR.

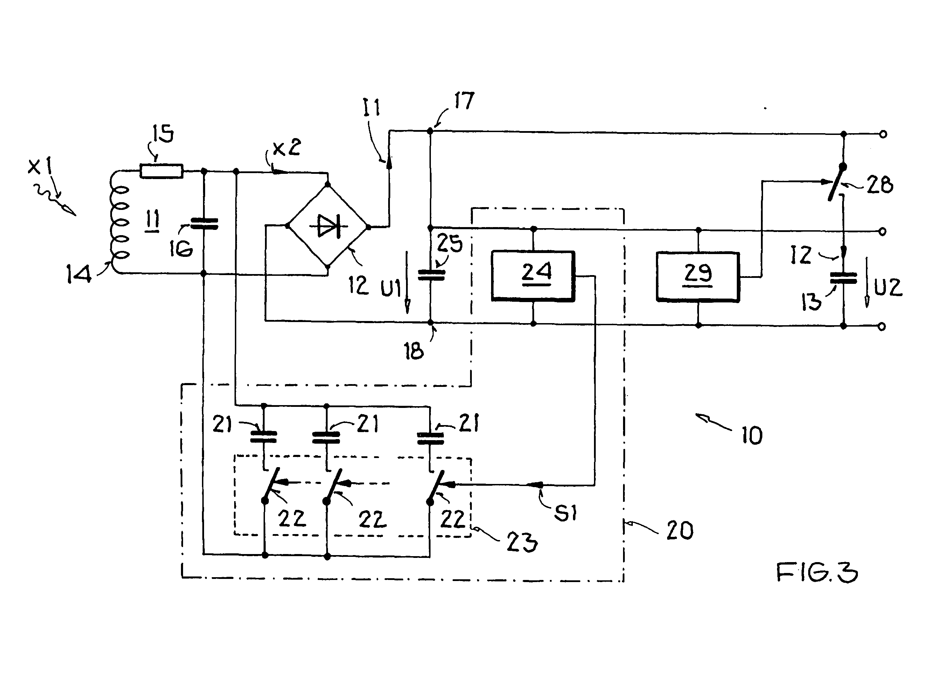

Im Unterschied zu dem Ausführungsbeispiel in Fig. 1 ist in dem Ausführungsbeispiel in Fig. 3 der steuerbare Schalter 28 als beliebiger digitaler Schalter 28 ausgebildet. Zur Ansteuerung ist hier eine Ansteuerschaltung 29, die ebenfalls von der Hilfsspannung U1 gespeist wird, vorgesehen, die ausgangsseitig ein Steuersignal S2 bereitstellt, über welches der steuerbare Schalter 28 digital steuerbar ist. Als digitaler Schalter 28 kommt hier beispielsweise ein MOSFET, JFET, Bipolar-Transistor, etc., die jeweils in ihrem digitalen Bereich der Kennlinie betrieben werden, in Frage.

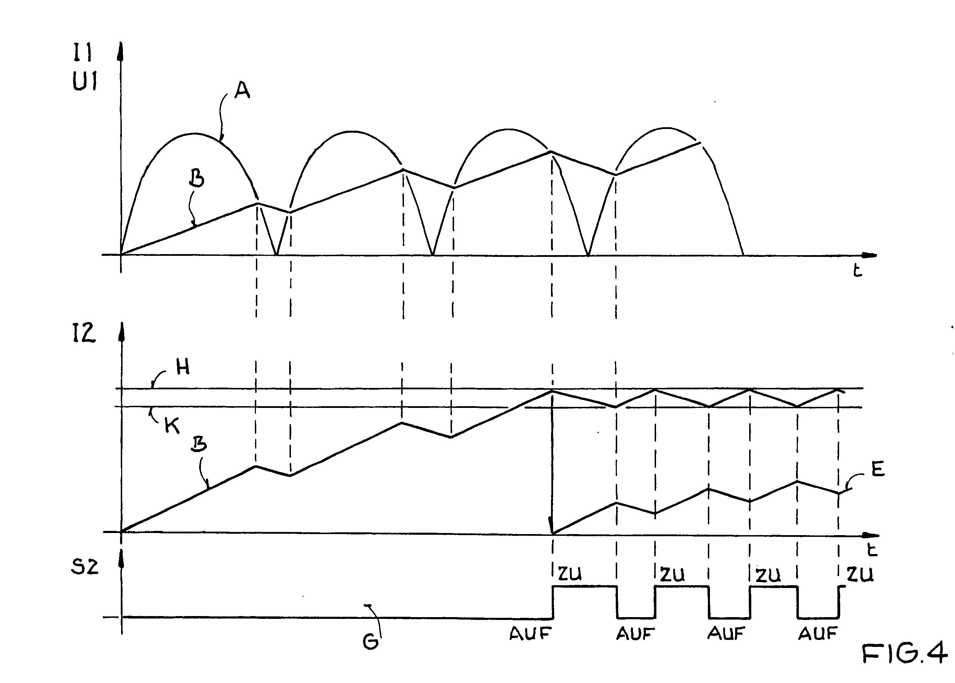

Nachfolgend sei die Funktionsweise der erfindungsgemäßen Schaltungsanordnung in Fig. 3 anhand der Signal-Zeit-Diagramme in Fig. 4 näher erläutert.

Die Erzeugung der Hilfsspannung U1 erfolgt hier analog zu der anhand der Fig. 1 beschriebenen Schaltungsanordnung. Im Unterschied dazu ist hier aber eine Steuerschaltung 29 vorgesehen, die abhängig von der Größe der Hilfsspannung U1 den digital betriebenen steuerbaren Schalter 28 zum Laden des Ladekondensators 13 schließt bzw., falls die Hilfsspannung U1 unter einen bestimmten Schwellwert abfällt, wieder öffnet. Die Abstimmung durch die Trimmkapazitäten 21 erfolgt in dem Zeitraum G, also bevor der steuerbare Schalter 28 zum Laden des Ladekondensators 13 zum ersten Mal geschlossen wird.

Es ist hier darauf zu achten, das die Hilfsspannung U1 nie unter eine vorgegebene Schaltsignalschwelle H fällt. Es wird somit über die Ansteuerschaltung 29 sowie das von dieser Ansteuerschaltung 29 ausgangsseitig bereitgestellte Steuersignal S2 eine Schalthysterese bereitgestellt, bei der der steuerbare Schalter 28 geschlossen und der Ladekondensator 13 aufgeladen wird, sobald die Hilfsspannung U1 eine erste Spannungsschwelle H erreicht, und wieder geöffnet wird, sofern die Hilfsspannung U1 eine untere Schaltsignalschwelle K erreicht, die unterhalb der oberen Schaltsignalschwelle H liegt.

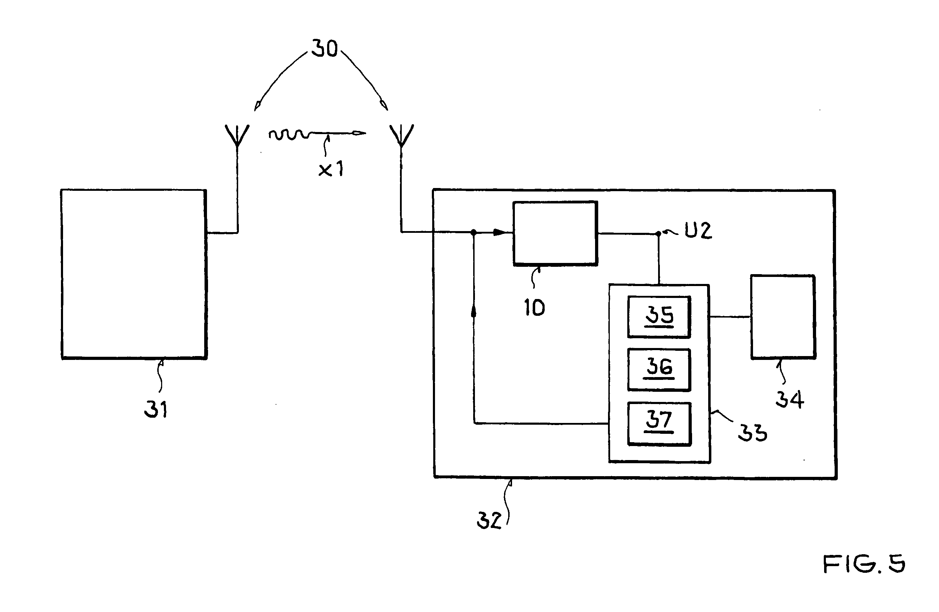

Fig. 5 zeigt in einem Blockschaltbild ein Reifendruckkontrollsystem. Das hier mit Bezugszeichen 30 bezeichnete Reifendruckkontrollsystem enthält eine Basisstation 31 und zumindest einen Reifendrucktransponder 32. Die Basisstation 31 ist in an sich bekannter Weise dazu ausgelegt, elektromagnetische Signale X1 zur Energie- und Datenübertragung zu erzeugen. Die Basisstation 31 ermittelt zudem - wie vorstehend beschrieben wurde - die für die Abstimmung des Transponderschwingkreises 11 erforderlichen Informationen und übermittelt diese über elektromagnetische Signale X1 zu dem Transponder 32, wo sie in einem eigens dafür vorgesehenen Abstimmspeicher abgelegt werden.

Der Transponder 32 weist in seinem Empfangspfad eine erfindungsgemäße Schaltung 10 zur Spannungsversorgung des Transponders 32 auf, die beispielsweise entsprechend den Ausführungsbeispielen in den Fig. 1 und 3 ausgebildet sein kann. Die Schaltungsanordnung 10 erzeugt, nachdem der Antennenschwingkreis 11 abgestimmt wurde, ausgangsseitig eine Versorgungsspannung U2, die der Spannungsversorgung einer im Transponder 32 angeordneten, integrierten Schaltung 33 dient.

Der Transponder 32 weist ferner einen Sensor 34 auf, der z.B. als kapazitiver Drucksensor ausgebildet ist und der somit zur Reifendruckmessung vorgesehen ist. Ferner ist ein Analog-Digital-Wandler 35 vorgesehen, der das analoge Signal des Sensors 34, welches Reifen spezifische Parameter (z.B. den Reifendruck) enthält, in ein digitales Signal wandelt und einem Codierer 36 zuführt. Dem Codierer 36 nachgeschaltet ist ein Modulator 37, der das codierte Signal moduliert.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

So ist die Erfindung nicht ausschließlich auf ein Reifendruckkontrollsystem beschränkt, wenngleich dort die Erfindung am vorteilhaftesten ist, sondern lässt sich bei beliebigen Transponderanwendungen, wie beispielsweise bei RFID-Transpondern, einsetzen.

Auch ist die Erfindung nicht auf die in den Fig. 1 und 3 dargestellten Schaltungsvarianten beschränkt. So kann die Abstimmschaltung beliebig erweitert werden, beispielsweise durch eine andere Ausgestaltung des Speichers, durch Verwendung eines mehr oder weniger komplexen Kapazitätsnetzwerkes zur Bereitstellung der schaltbaren Trimmkapazitäten, etc. Ferner kann statt einem PMOS-Transistors selbstverständlich ein beliebiger Transistor, der die Funktionalität des analog betriebenen Transistors aufweist, verwendet werden. Denkbar wäre auch die Verwendung einer mehr als zweistufigen Ladeschaltung, insbesondere für solche Anwendungen, bei denen der Ladekondensator eine sehr hohe Kapazität aufweist und/oder die Abstimmschaltung eine vergleichsweise hohe Versorgungsspannung benötigt.

Bezugszeichenliste

10 Schaltungsanordnung
11 Antennenschwingkreis
12 Gleichrichterschaltung
13 Ladekondensator
14 induktive Antenne, Antennenspule
15 resitives Element, Widerstand
16 kapazitives Element, Kondensator
17 Ausgangsanschluß der Gleichrichterschaltung
18 Ausgangsanschluß der Gleichrichterschaltung
20 Abstimmschaltung
21 Trimmkapazitäten
22 steuerbare Schalter
23 Schaltvorrichtung
24 Speicher, EEPROM
25 Hilfskondensator, Hilfsspannungsquelle
26 steuerbarer Schalter, PMOS-FET
27 Band-Gap-Steuerschaltung
28 steuerbarer Schalter
29 Ansteuerschaltung
30 Reifendruckkontrollsystem
31 Basisstation
32 (Reifendruck-)Transponder
33 integrierte Schaltung
34 Sensor, kapazitiver Drucksensor
35 Analog-Digital-Wandler
36 Codierer
37 Modulator

A Ladestrom
B Hilfsspannung
C Referenzpotenzial
D Spannungsschwelle, Schwellenlinie
E Ladestrom
F Zeitraum zum Abstimmen des Antennenschwingkreises
G Zeitraum zum Abstimmen des Antennenschwingkreises
H vorgegebene obere Schaltsignalschwelle/Spannungsschwelle
K vorgegebene untere Schaltsignalschwelle/Spannungsschwelle

I1 Ladestrom
I2 Ladestrom
S1 Steuersignal
S2 Steuersignal
U1 Hilfsspannung
U2 Versorgungsspannung
VR Referenzpotenzial
UTH Einschaltspannung
X1 elektromagnetisches Signal

X2 Wechselsignal

**Patentansprüche**

1. Schaltungsanordnung (10) zur Spannungsversorgung eines Transponders, enthaltend:

   - einen Antennenschwingkreis (11) und eine nachgeschaltete Gleichrichterschaltung (12) zur Aufnahme und zum Gleichrichten eines elektromagnetischen Signals (X1, X2),
   - einen der Gleichrichterschaltung (12) ausgangsseitig nachgeschalteten Ladekondensator (13) zur Bereitstellung einer ersten Versorgungsspannung (U2) zur Versorgung einer integrierten Schaltung des Transponders,
   - einer Abstimmschaltung (20) zur Abstimmung des Antennenschwingkreises (11) auf dessen Resonanzfrequenz
   **dadurch gekennzeichnet,**
   - **dass** eine der Gleichrichterschaltung (12) ausgangsseitig nachgeschaltete Hilfsspannungsquelle (25) vorgesehen ist, die dazu ausgelegt ist, eine gegenüber der ersten Versorgungsspannung (U2) kleinere zweite Versorgungsspannung (U1) zur Versorgung der Abstimmschaltung (20) bereitzustellen.

2. Schaltungsanordnung nach Anspruch 1,
   **dadurch gekennzeichnet,**
   **dass** die Hilfsspannungsquelle (25) einen zwischen den Ausgängen (17, 18) der Gleichrichterschaltung (12) und den Eingängen der Abstimmschaltung (20) angeordneten Hilfskondensator (25) aufweist, der eine gegenüber dem Ladekondensator (13) geringere Kapazität aufweist.

3. Schaltungsanordnung nach wenigstens einem der vorstehenden Ansprüche,
   **dadurch gekennzeichnet,**
   **dass** der Ladekondensator (13) eine Kapazität im Bereich von 0,5μF bis 5μF aufweist und/oder der Hilfskondensator (25) eine Kapazität im Bereich von 50pF bis 500 pF aufweist.

4. Schaltungsanordnung nach wenigstens einem der vorstehenden Ansprüche,
   **dadurch gekennzeichnet,**
   **dass** eine zumindest zweistufige Ladeschaltung (25 - 29) vorgesehen ist, die eine erste Ladestufe (25) zum Aufladen eines Hilfskondensators (25) auf die zweite Versorgungsspannung (U1) und die eine zweite Ladestufe (27, 29) zum Aufladen des Ladekondensators (13) auf die erste Versorgungsspannung (U2) aufweist, wobei die zweite Ladestufe (27, 29) den Ladekondensator (13) erst dann auflädt, wenn eine vorgebbare Ladeschwelle (D, H) der zweiten Versorgungsspannung (U1) überschritten ist.

5. Schaltungsanordnung nach Anspruch 4,
**dadurch gekennzeichnet,**
**dass** die Ladeschaltung (25 - 29) zumindest einen steuerbaren Schalter (26, 28) aufweist, der in Reihe zwischen einem Ausgangsanschluss (17, 18) der Gleichrichterschaltung (12) und einem Elektrodenanschluss des Ladekondensators (13) angeordnet ist.

6. Schaltungsanordnung nach wenigstens einem der Ansprüche 4 oder 5,
**dadurch gekennzeichnet,**
**dass** die Ladeschaltung (25 - 29) eine Ansteuerschaltung (29) aufweist, die ein Steuersignal (S2) zum Auf- und Zusteuern eines digital betriebenen steuerbaren Schalters (28) abhängig von der zweiten Versorgungsspannung (U1) und der vorgebbare Ladeschwelle (H) aufweist.

7. Schaltungsanordnung nach wenigstens einem der Ansprüche 4 bis 6,
**dadurch gekennzeichnet,**
**dass** die Ladeschaltung (25 - 29) eine Bandgap-Steuerschaltung (27) aufweist, die ein Referenzpotenzial (VR) zur Ansteuerung eines im analogen Kennlinienbereich betriebenen, als Transistor ausgebildeten steuerbaren Schalters (26) abhängig von der zweiten Versorgungsspannung (U1) und abhängig von einem Schaltpotenzial (UTH) des Transistors (26) aufweist.

8. Schaltungsanordnung nach wenigstens einem der vorstehenden Ansprüche,
**dadurch gekennzeichnet,**
**dass** der Antennenschwingkreis (11) wenigstens eine Antennenspule (14) und ein erstes kapazitives Element (16) in Parallelschaltung aufweist.

9. Schaltungsanordnung nach wenigstens einem der vorstehenden Ansprüche,
**dadurch gekennzeichnet,**
**dass** die Abstimmschaltung (20) einen Speicher (24), insbesondere ein EEPROM (24), aufweist, in welchem Informationen zum Abstimmen eines ersten kapazitiven Elements (16) des Antennenschwingkreises (11) gespeichert sind.

10. Schaltungsanordnung nach wenigstens einem der Ansprüche 8 oder 9,
**dadurch gekennzeichnet,**
**dass** die Abstimmschaltung (20) zumindest ein weiteres, über Schaltvorrichtungen (22, 23) schaltbares kapazitives Element (21) aufweist, welches oder welche parallel zueinander und zu dem ersten kapazitiven Element (16) angeordnet ist/sind und von denen zumindest eines dem ersten kapazitiven Element (16) zuschaltbar ist.

11. Verfahren zur Spannungsversorgung eines Transponders mit einer ersten Versorgungsspannung (U2) mittels einer Schaltungsanordnung (10) nach wenigstens einem der vorstehenden Ansprüche,

   - mit einem ersten Betriebsmodus, bei dem ein erstes kapazitives Element (16) eines empfangsseitigen Antennenschwingkreises (11) auf dessen Resonanzfrequenz abgestimmt wird und während dem ein Ladekondensator (13) inaktiv geschaltet wird,
   - mit einem zweiten Betriebsmodus, bei dem der Ladekondensator (13) zur Bereitstellung der ersten Versorgungsspannung (U2) aufgeladen wird.

12. Verfahren nach Anspruch 11,
**gekennzeichnet durch**
folgende, nacheinander durchgeführte Verfahrensschritte:

   (a) Ein zumindest teilweise entladener, inaktiv geschalteter Ladekondensator (13) eines Transponders (32) wird bereitgestellt;
   (b) Empfängerseitiges Aufnehmen und Gleichrichten eines elektromagnetischen Signals (X1, X2);
   (c) Aufladen eines Hilfskondensators (25) mit einem gleichgerichteten Stromsignal (I1) zur Bereitstellung einer gegenüber der ersten Versorgungsspannung (U2) kleineren zweiten Versorgungsspannung (U1);
   (d) Abstimmen eines empfängerseitigen Antennenschwingkreises (11) auf dessen Resonanzfrequenz unter Verwendung der zweiten Versorgungsspannung (U1) solange, bis der Antennenschwingkreis (11) abgestimmt ist;
   (e) Zuschalten des Ladekondensators (13);
   (f) Aufladen des Ladekondensators (13) zur Bereitstellung der ersten Versorgungsspannung (U2) des Transponders (32).

13. Verfahren nach wenigstens einem der Ansprüche 11 oder 12,
**dadurch gekennzeichnet,**
**dass** zum Aktivieren des Ladekondensators (13) der steuerbare Schalter (26, 28) erst dann zugeschaltet wird, wenn die zweite Versorgungsspannung (U1) eine vorgebbare Ladeschwelle (D, H) erreicht und/ oder überschritten hat.

14. Verfahren nach wenigstens einem der Ansprüche 11 bis 13,
**dadurch gekennzeichnet,**
**dass** der Antennenschwingkreis (11) durch paralleles Zuschalten oder Wegschalten von weiteren kapazitiven Elementen (21) auf die Resonanzfrequenz des Antennenschwingkreises (11) abgestimmt wird.

**15.** Verfahren nach wenigstens einem der Ansprüche 11 bis 14,
**dadurch gekennzeichnet,**
**dass** das Abstimmen im Verfahrensschritt (d) unter Verwendung von vorher gespeicherten Abstimminformationen erfolgt.

**16.** Verfahren nach wenigstens einem der Ansprüche 11 bis 15,
**dadurch gekennzeichnet,**
**dass** die Abstimminformationen vor dem Verfahrensschritt (c) und/oder insbesondere vor dem ersten und zweiten Betriebsmodus gespeichert werden, wobei die Abstimminformationen senderseitig anhand der Frequenz des gesendeten und von dem Transponder (32) aufgenommenen elektromagnetischen Signal (X1, X2) ermittelt werden.

**17.** Verfahren nach wenigstens einem der Ansprüche 11 bis 16,
**dadurch gekennzeichnet,**
**dass** der Antennenschwingkreis (11) über ein LF-Signal (X1), insbesondere über ein 125-KHz-Frequenzsignal (X1), angeregt wird.

**18.** Transponder (32), insbesondere für ein Reifendruckkontrollsystem, mit einem Empfangspfad, in dem eine Schaltungsanordnung (10) zur Spannungsversorgung des Transponders (32) nach wenigstens einem der Ansprüche 1 bis 10 angeordnet ist.

**19.** Transponder nach Anspruch 18,
**dadurch gekennzeichnet,**
**dass** der Transponder (32) aufweist:

- einen Sensor (34), der dazu ausgelegt ist, Reifen spezifische Parameter aufzunehmen,
- einen Analog-Digital-Wandler (35), der ein analoges Signal mit den Reifen spezifische Parameter in ein digitales Signal wandelt,
- ein Codierer (36), der das digitale Signal codiert, und
- einen Modulator (37), der das codierte Signal moduliert.

**20.** Transponder nach wenigstens einem der Ansprüche 18 oder 19,
**dadurch gekennzeichnet,**
**dass** als Sensor (34) ein kapazitiver Drucksensor (34) zur Reifendruckmessung vorgesehen ist.

**Claims**

**1.** Circuit arrangement (10) for voltage supply of a transponder, comprising:

- an antenna oscillator circuit (11) and a downstream rectifier circuit (12) for reception and rectification of an electromagnetic signal (X1, X2), .
- a charging capacitor (13), which is connected downstream of the rectifier circuit (12) at the output side, for providing a first supply voltage (U2) for supply of an integrated circuit of the transponder,
- a tuning circuit (20) for tuning the antenna oscillator circuit (11) to the resonant frequency thereof,
**characterised in that**
- an auxiliary voltage source (25), which is connected downstream of the rectifier circuit (12) at the output side, is provided and is designed for the purpose of providing a second supply voltage (U1), which is smaller by comparison with the first supply voltage (U2), for supply of the tuning circuit (20).

**2.** Circuit arrangement according to claim 1, **characterised in that** the auxiliary voltage source (25) comprises an auxiliary capacitor (25) which is arranged between the outputs (17, 18) of the rectifier circuit (12) and the inputs of the tuning circuit (20) and which has a smaller capacitance by comparison with the charging capacitor (13).

**3.** Circuit arrangement according to at least one of , the preceding claims, **characterised in that** the charging capacitor (13) has a capacitance in the range of 0.5 $\mu$F to 5 $\mu$F and/or the auxiliary capacitor (25) has a capacitance in the range of 50 pF to 500 pF.

**4.** - Circuit arrangement according to at least one of the preceding claims,
**characterised in that** an at least two-stage charging circuit (25 - 29) is provided, which comprises a first charging stage (25) for charging an auxiliary capacitor (25) to the second supply voltage (U1) and a second charging stage (27, 29) for charging the charging capacitor (13) to the first supply voltage (U2), wherein the second charging stage (27, 29) charges the charging capacitor (13) only when a predeterminable charging threshold (D, H) of the second supply voltage (U1) is exceeded.

**5.** Circuit arrangement according to claim 4, **characterised in that** the charging circuit (25 - 29) comprises at least one controllable switch (26, 28) which is arranged in series between an output terminal (17, 18) of the rectifier circuit (12) and an electrode terminal of the charging capacitor (13).

**6.** Circuit arrangement according to at least one of claims 4 and 5, **characterised in that** the charging circuit (25 - 29) comprises a drive control circuit (29) which has a control signal (S2) for controlling open and controlling closed a digitally operated controllable switch (28) in dependence on the second supply voltage (U1) and the predeterminable charging threshold (H).

**7.** Circuit arrangement according to at least one of claims 4 to 6, **characterised in that** the charging circuit (25 - 29) comprises a bandgap control circuit (27) which has a reference potential (VR) for drive control of a controllable switch (26), which is operated in the analogous characteristic curve region and is constructed as a transistor, in dependence on the second supply voltage (U1) and on a switching potential (UTH) of the transistor (26).

**8.** Circuit arrangement according to at least one of the preceding claims, **characterised in that** the antenna oscillator circuit (11) comprises at least one antenna coil (14) and a first capacitive element (16) in parallel connection.

**9.** Circuit arrangement according to at least one of the preceding claims, **characterised in that** the tuning circuit (20) comprises a memory (24), particularly an EEPROM (24), in which data for screening a first capacitive element (16) of the antenna oscillator circuit (11) are stored.

**10.** Circuit arrangement according to at least one of claims 8 and 9, **characterised in that** the tuning circuit (20) comprises at least one further capacitive element (21) which is switchable by way of switching devices (22, 23) and which is or are arranged in parallel with one another and with the first capacitive element (16) and by which at least one is connectible with the first capacitive element (16).

**11.** Method for voltage supply of a transponder with a first supply voltage (U2) by means of a circuit arrangement (10) according to at least one of the preceding claims,

- with a first operating mode in which a first capacitive element (16) of an antenna oscillator circuit (11) at the receiving side is tuned to the resonant frequency thereof and during which a charging capacitor (13) is switched to be inactive, and
- with a second operating mode in which the charging capacitor (13) is charged for providing the first supply voltage (U2).

**12.** Method according to claim 11, **characterised by** the following method steps performed in succession:

a) a charging capacitor (13), which is at least partly discharged and switched to be inactive, of a transponder (32) is provided;
b) receiving and rectifying an electromagnetic signal (X1, X2) at the receiver side;
c) charging an auxiliary capacitor (25) by a rectified current signal (11) for providing a second supply voltage (U1) smaller by comparison with the first supply voltage (U2);
d) tuning an antenna oscillator circuit (11) at the receiver side to the resonant frequency thereof with use of the second supply voltage (U1) until the antenna oscillator circuit (11) is tuned;
e) connecting the charging capacitor (13); and
f) charging the charging capacitor (13) for providing the first supply voltage (U2) of the transponder (32).

**13.** Method according to at least one of claims 11 and 12, **characterised in that** for activation of the charging capacitor (13) the controllable switch (26, 28) is switched on only when the second supply voltage (U1) has reached and/or exceeded a predeterminable charging threshold (D, H).

**14.** Method according to at least one of claims 11 to 13, **characterised in that** the antenna oscillator circuit (11) is tuned to the resonant frequency of the antenna oscillator circuit (11) by parallel connecting or disconnecting of further capacitive elements (21).

**15.** Method according to at least one of claims 11 to 14, **characterised in that** the tuning in method step (d) is carried out with use of previously stored tuning data.

**16.** Method according to at least one of claims 11 to 15, **characterised in that** the tuning data are stored before the method step (c) and/or particularly before the first and second operating mode, wherein the tuning data are determined at the transmitter side on the basis of the frequency of the transmitted electromagnetic signal (X1, X2) received by the transponder (32).

**17.** Method according to at least one of claims 11 to 16, **characterised in that** the antenna oscillator circuit (11) is excited by way of an LF signal (X1), particularly by way of a 125 KHz frequency signal (X1).

**18.** Transponder (32), particularly for a tyre pressure checking system, with a receiving path in which a circuit arrangement (10) for voltage supply of the transponder (32) according to at least one of claims 1 to 10 is arranged.

**19.** Transponder according to claim 18, **characterised in that** the transponder (32) comprises:

- a sensor (34) designed for the purpose of recording tyre-specific parameters,

- an analog-to-digital converter (35) which converts an analog signal with the tyre-specific parameters into a digital signal, a coder (36) which codes the digital signal and

- a modulator (37) which modulates the coded signal.

**20.** Transponder according to at least one of claims 18 and 19, **characterised in that** a capacitor pressure sensor (34) for tyre-pressure measurement is provided as sensor (34).

## Revendications

**1.** Circuit (10) pour l'alimentation en tension d'un transpondeur, comportant :

. un circuit oscillant d'antenne (11) et un circuit redresseur (12) monté en aval pour recevoir et redresser un signal électromagnétique (X1, X2),
. un condensateur de charge (13) monté en aval côté sortie du circuit redresseur (12) pour fournir une première tension d'alimentation (U2) pour l'alimentation d'un circuit intégré du transpondeur,
. un circuit d'accord (20) pour syntoniser le circuit oscillant d'antenne (11) sur la fréquence de résonance de celui-ci, '

**caractérisé en ce que** .

. l'on prévoit une source de tension auxiliaire (25) montée en aval côté sortie du circuit redresseur (12), qui est prévue pour fournir une deuxième tension d'alimentation (U1) inférieure à la première tension d'alimentation (U2) pour alimenter le circuit d'accord (20).

**2.** Circuit selon la revendication 1,
**caractérisé en ce que** la source de tension auxiliaire (25) comporte un condensateur auxiliaire (25) monté entre les sorties (17,18) du circuit redresseur (12) et les entrées du circuit d'accord (20) à capacité réduite par rapport à celle du condensateur de charge (13).

**3.** Circuit selon l'une au moins des revendications précédentes, **caractérisé en ce que** le condensateur de charge (13) présente une capacité située dans la zone de 0,5$\mu$F à 5 $\mu$F et **en ce que** le condensateur auxiliaire (25) présente une capacité située dans la zone de 50pF à 500 pF.

**4.** Circuit selon l'une au moins des revendications précédentes, **caractérisé en ce que** l'on prévoit un circuit de charge (25-29) à au moins deux étages, présentant un premier étage de charge (25) pour amener la charge d'un condensateur auxiliaire (25) à la deuxième tension d'alimentation (U1) et un deuxième étage de charge (27,29) pour amener la charge du condensateur de charge (13) à la première tension d'alimentation (U2), le deuxième étage de charge (27,29) ne chargeant le condensateur de charge (13) que lorsqu'un seuil de chargement (D,H) prédéfini de la deuxième tension d'alimentation (U1) est dépassé.

**5.** Circuit selon la revendication 4,
**caractérisé en ce que** le circuit de charge (25-29) présente au moins un interrupteur commandable (26,28), monté en série entre une connexion de sortie (17,18) du circuit redresseur (12) et une connexion d'électrode du condensateur de charge (13).

**6.** Circuit selon l'une au moins des revendications 4 ou 5, **caractérisé en ce que** le circuit de charge (25-29) présente un circuit de commande (29) qui présente un signal de commande (S2) pour la commande en ouverture et en fermeture d'un interrupteur commandable numériquement (28) en fonction de la deuxième tension d'alimentation (U1) et du seuil de chargement (H) pouvant être prédéfini.

**7.** Circuit selon l'une au moins des revendications 4 à 6, **caractérisé en ce que** le circuit de charge (25-29) présente un circuit de commande à espace de bande (27), qui présente un potentiel de référence (VR) pour la commande d'un interrupteur (26) dont le point de fonctionnement est situé dans la zone des caractéristiques analogiques, réalisé sous la forme d'un transistor, en fonction de la deuxième tension d'alimentation (U1) et d'un potentiel de commutation (UTH) du transistor (26).

**8.** Circuit selon l'une au moins des revendications précédentes, **caractérisé en ce que** le circuit oscillant d'antenne (11) présente au moins une bobine d'antenne (14) et un premier élément capacitif (16) selon un circuit parallèle.

**9.** Circuit selon l'une au moins des revendications précédentes, **caractérisé en ce que** le circuit redresseur (20) présente une mémoire (24), plus particulièrement une mémoire EEPROM (24), dans laquelle sont mémorisées des informations pour la syntonisation d'un premier élément capacitif (16) du circuit oscillant d'antenne (11).

**10.** Circuit selon l'une au moins des revendications 8 ou 9, **caractérisé en ce que** le circuit d'accord (20) présente au moins un élément capacitif (21) supplémentaire pouvant être monté par l'intermédiaire de dispositifs de circuit (22,23), élément(s) disposé(s) en parallèle entre eux et par rapport au premier élément capacitif (16) et dont un au moins peut être connecté au premier élément capacitif (16) .

11. Procédé d'alimentation en tension d'un transpondeur par une première tension d'alimentation (U2) au moyen d'un circuit (10) selon l'une au moins des revendications précédentes, comprenant

. un premier mode de fonctionnement, dans lequel un premier élément capacitif (16) d'un circuit oscillant d'antenne (11) côté réception est accordé à la fréquence de résonance de celui-ci et durant lequel un condensateur de charge (13) est connecté inactif,
. un deuxième mode de fonctionnement, dans lequel le condensateur de charge (13) est chargé pour fournir la première tension d'alimentation (U2).

12. Procédé selon la revendication 11, **caractérisé par** les étapes suivantes effectuées successivement :

(a) on utilise un condensateur de charge (13) d'un transpondeur (32) connecté inactif et au moins partiellement déchargé ;
(b) on réceptionne et on redresse du côté réception un signal électromagnétique (X1, X2) ;
(c) on charge un condensateur auxiliaire (25) par un signal de courant (11) redressé pour fournir une deuxième tension d'alimentation (U1) inférieure à la première tension d'alimentation (U2) ;
(d) on accorde un circuit oscillant d'antenne (11) côté réception à sa fréquence de résonance en utilisant la deuxième tension d'alimentation (U1) jusqu'à ce que le circuit oscillant d'antenne (11) soit accordé ;
(e) on connecte le condensateur de charge (13) ;
(f) on charge le condensateur de charge (13) pour fournir la première tension d'alimentation (U2) du transpondeur (32).

13. Procédé selon l'une au moins des revendications 11 ou 12, **caractérisé en ce que** pour activer le condensateur de charge (13) on ne connecte l'interrupteur commandable (26,28) que lorsque la deuxième tension d'alimentation (U1) a atteint et/ou dépassé un seuil de chargement (D,H) prédéfini.

14. Procédé selon l'une au moins des revendications 11 à 13, **caractérisé en ce que** le circuit oscillant d'antenne (11) est accordé à la fréquence de résonance du circuit oscillant d'antenne (11) par connexion ou déconnexion en parallèle d'éléments capacitifs supplémentaires (21).

15. Procédé selon l'une au moins des revendications 11 à 14, **caractérisé en ce que** la syntonisation dans l'étape (d) est effectuée en utilisant des informations d'accord mémorisées préalablement.

16. Procédé selon l'une au moins des revendications 11 à 15, **caractérisé en ce que** les informations d'accord sont mémorisées avant l'étape (c) et/ou plus particulièrement avant les premier et deuxième modes de fonctionnement, les informations d'accord étant déterminées du côté émetteur à l'aide de la fréquence du signal électromagnétique (X1, X2) envoyé et réceptionné par le transpondeur (32).

17. Procédé selon l'une au moins des revendications 11 à 16, **caractérisé en ce que** le circuit oscillant d'antenne (11) est excité par l'intermédiaire d'un signal LF (X1), plus particulièrement d'un signal de fréquence (X1) de 125 KHz.

18. Transpondeur (32), plus particulièrement pour un système de contrôle de la pression de pneumatiques comprenant un chemin de réception dans lequel est disposé un circuit (10) d'alimentation en tension du transpondeur (32) selon au moins une des revendications 1 à 10.

19. Transpondeur selon la revendication 18, **caractérisé en ce que** le transpondeur (32) présente :

. un capteur (34) conçu pour recevoir des paramètres spécifiques aux pneumatiques,
. un convertisseur analogique-numérique (35) qui convertit un signal analogue comportant les paramètres spécifiques aux pneumatiques en un signal numérique,
. un codeur (36) qui code le signal numérique, et
. un modulateur (37) qui module le signal codé.

20. Transpondeur selon l'une au moins des revendications 18 ou 19, **caractérisé en ce que** l'on prévoit comme capteur (34) un capteur de pression capacitif (34) pour mesurer la pression de pneumatiques.

FIG.1

FIG.2

FIG.3

FIG.4

FIG. 5

EP 1 691 320 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19755250 A1
- DE 19614455 A1
- DE 10151856 A1
- EP 1387313 A2
- EP 0505906 A1

### In der Beschreibung aufgeführte Nicht-Patentliteratur

- **KLAUS FINKENZELLER.** RFID-Handbuch. Hanser Verlag, 2002